# EUROPÄISCHE PATENTSCHRIFT

(11) **EP 0 712 280 B1**
(45) Veröffentlichungstag und Bekanntmachung des Hinweises auf die Patenterteilung: **07.05.1997**
(21) Anmeldenummer: 94921663.4
(22) Anmeldetag: 20.07.1994
(51) Int. Cl.: A21C 9/04

(54) **VERFAHREN ZUM EXTRUDIEREN UND BESCHICHTEN VON NAHRUNGSMITTELN, SOWIE VORRICHTUNG ZU DESSEN DURCHFÜHRUNG**
PROCESS AND DEVICE FOR EXTRUDING AND COATING FOODSTUFFS
PROCEDE D'EXTRUSION ET D'ENROBAGE D'ALIMENTS ET DISPOSITIF DE MISE EN OEUVRE DUDIT PROCEDE

(30) Priorität: 03.08.1993 DE 4326047
(43) Veröffentlichungstag der Anmeldung: 22.05.1996
(73) Patentinhaber: SCHAAF TECHNOLOGIE GMBH, D-65520 Bad Camberg (DE)
(72) Erfinder: SCHAAF, Heinz-Josef, D-65520 Bad Camberg (DE)
(74) Vertreter: Lewald, Dietrich, Dipl.-Ing.
(86) Internationale Anmeldenummer: EP9402401
(87) Internationale Veröffentlichungsnummer: WO9503703

(56) Entgegenhaltungen:
- EP-A- 0 234 376
- EP-A- 0 321 188
- EP-A- 0 484 707
- GB-A- 2 177 585
- US-A- 3 593 680
- US-A- 3 603 287
- US-A- 4 292 917

## Beschreibung

Die Erfindung bezieht sich auf eine Vorrichtung zum Extrudieren von Nahrungsmitteln, bei der das Nahrungsmittel mit Zusatzstoffen, wie Farbstoffen oder dergleichen, beschichtet werden kann. Die Vorrichtung weist eine Extruderschnecke zur Zuführung des zu extrudierenden Materiales auf, das durch eine Düse extrudiert wird und anschließend mittels einer Schneideinrichtung abgetrennt wird.

Extrudierte Nahrungsmittel, die als Stange mit einer bestimmten Kontur aus der Extrusionsdüse austreten sind weit verbreitet. Nach dem Austritt aus der Düse wird das Extrudat in der gewünschten Länge mittels einer Schneidvorrichtung abgeschnitten und anschließend verpackt und beispielsweise als Snack in den Handel gebracht. Eine solche Vorrichtung zum Extrudieren von Nahrungsmitteln ist beispielsweise aus der US 4 240 779 bekannt.

Werden mittels der Extrusionsmaschine Nahrungsmittel aus expandierenden Teigen, die häufig für die Herstellung von sogenannten Snacks verwendet werden, extrudiert, kommt es aufgrund der Druckdifferenz an der Düse, die durch die Erhitzung des Teiges und den in dem Teig eingelagerten Wasserdampf entsteht, zu einer starken Expansion des abgetrennten Extrudatstreifens.

Die Snacks bzw. Extrudatstreifen können mit Zusatsstoffen beschichtet werden, um deren Geschmack zu beeinflußen oder durch Farbauftrag deren Aussehen attraktiver zu gestalten.

Zum Beschichten der Extrudate sind verschiedene Verfahren bekannt, so können die Extrudate in Flüssigkeiten eingetaucht werden oder mit Walzen bearbeitet werden, die die entsprechenden Zusatzstoffe aufbringen. Zum Farbauftrag können dabei auch verschiendenste Musterwalzen zur Anwendung kommen, die unterschiedliche Muster auf den Snack aufbringen. Dabei müssen für die gewünschte Beschichtung jedoch entsprechende Musterwalzen erstellt werden, die logischerweise nicht für andere Muster bzw. Design verwendet werden können. Außerdem erfordert diese Art der Beschichtung einen aufwendigen zusätzlichen Arbeitsgang.

Selbstverständlich ist es auch möglich, dem zu extrudierenden Material Zusatzstoffe, wie Farbstoffe, zuzugeben, so daß Extrudate mit verschiedensten Farben erzeugt werden können. Dabei können die Farbstoffe auch im Bereich der Extrusionsdüse zugegeben werden, wodurch sich Farbstreifen und Mamorierungseffekte ergeben. Eine gezielte und nur örtliche Beschichtung der Snacks, um beispielsweise ein Tierauge zu erzeugen, ist mit diesem Verfahren nicht möglich.

Aufgabe der Erfindung ist es, ein Verfahren zum Extrudieren und Beschichten von Nahrungsmitteln zu schaffen mit dem auf einfache Weise Extrudate mit Zusatzstoffen beschichtet werden können, desweiteren soll eine Vorrichtung zur Durchführung des Verfahrens geschaffen werden.

Die Aufgabe wird durch die Merkmale des Verfahrensanspruchs 1 und die Merkmale des Vorrichtungsanspruchs 10 gelöst.

Mit dem anmeldungsgemäßen Verfahren können die Extrudate auf einfache Weise ohne einen zusätzlichen Fertigungsschritt während der Extrusion mit einem Zusatzstoff beispielsweise einem Farbstoff beschichtet werden.

Dieses Verfahren zur Beschichtung der Extrudate kann mit einem Verfahren zur Beeinflußung der Form der Extrudate kombiniert werden, um die Extrudate in vielfältiger Weise gestalten zu können. Bei diesem Verfahren zur Beeinflußung der Form wird das Extrudat vor dem Abschneiden an bestimmten Stellen eingeritzt. Mittels dieses Verfahrens ist es beispielsweise möglich, bei Verwendung von expandierenden Teigen Tierfiguren mit Beinen und Ohren herzustellen, die besonders bei Kindern sehr beliebt sind, da durch die aufgebrachten Ritze das Expansionsverhalten des Teiges sehr stark beeinflußt werden kann.

Vorzugsweise erfolgt das Aufspritzen nicht kontinuierlich, sondern intermittierend, wobei eine Anpassung der Frequenz an die Extrusionsgeschwindigkeit oder auch an die Schneidfrequenz der Schneideinrichtung den Vorteil bringt, daß der Zusatzstoff nur auf die extrudierten Teile an die gewünschten Stellen gespritzt wird.

Zur Steuerung der Spritzeinrichtung kann eine Fotozelle verwendet werden, die das Abschneiden des Extrudates durch die Schneideinrichtung registriert. Es kann jedoch auch ein Taktgeber verwendet werden, um eine Synchronisation der Spritzeinrichtung mit der Extrusion des Materiales zu erzielen.

Vorteilhafter Weise wird das Aufspritzen des Zusatzstoffes unterbrochen, wenn die Schneideinrichtung das Extrudat durchtrennt, um ein Verschmutzen der Schneideinrichtung zu verhindern.

Gemäß einer Weiterbildung der Erfindung werden mehrere Zusatzstoffe zum Beispiel Farben während des Extrusionsvorganges auf das Extrudat aufgespritzt. Dabei können diese Stoffe nacheinander oder gleichzeitig aufgespritzt werden. Hierfür haben sich Spritzeinrichtungen mit Druckköpfen, wie sie in der Drucktechnik bekannt sind, bewährt. Diese Druckköpfe können eine Vielzahl von Düsen aufweisen und erlauben das Aufspritzen von sehr komplexen Designs. Es hat sich gezeigt, daß der Farbauftrag mit dieser Technik eine sehr plastische Wirkung ergibt. Selbstverständlich können für Lebensmittel nur lebensmittelgeeignete zugelassene Farben verwendet werden.

Die Druckköpfen können nach dem Bubble-jet oder Piezo-Verfahren arbeiten und mit einer Einrichtung zur Reinigung verstopfter Düsen versehen sein. Vorteilhaft sind auch das Airless oder Magnetverfahren für das Aufspritzen der Stoffe, die ohne Luftzufuhr arbeiten. Der Druckkopf sollte leicht austauschbar sein, um geringe Stillstandszeiten der Maschine zu erzielen.

Werden Druckköpfe mit einer Vielzahl von Düsen verwendet, so können bereits durch eine entsprechende Steuerung des Druckkopfes unterschiedlichste Spritzmuster erzeugt werden. Die Spritzeinrichtung kann verstellbar sein, um diese dem zu bearbeitenden Produkt anzupassen. Gemäß einer Weiterbildung der Erfindung ist die Spritzrichtung der Spritzeinrichtung mittels einer Steuereinrichtung verstellbar, wodurch die Spritzeinrichtung automatisch an verschiedene Anforderungen angepaßt werden kann und sogar während des Betriebes der Einrichtung verstellt werden kann. Mit einer solchen Einrichtungen kann auch während des Aufspritzens der Stoffe der Strahl geschwenkt werden, um ein bestimmtes Design zu erzielen.

Die Erfindung wird folgend anhand eines bevorzugten Ausführungsbeispiels näher erläutert.

Figur 1 zeigt die anmeldungsgemäße Vorrichtung von der Seite.

Figur 2 zeigt die anmeldungsgemäße Vorrichtung von vorne.

Eine Extrusionsdüse 2 zum Extrudieren eines Materiales 11 ist in einem Düsenkopf 1 vorgesehen. Von einer nicht gezeigten Extruderschnecke wird Material 11 durch einen Kanal im Düsenkopf 1 zur Extrusionsdüse 2 gedrückt. Das Material 11 durchtritt die Düse 2, die dem extrudierten Strang die gewünschte Form gibt, und wird von einer Schneideinrichtung in Stücke der gewünschten Länge geschnitten. Bei dem dargestellten Ausführungsbeispiel handelt es sich bei der Schneideinrichtung um eine Messerschneideinrichtung, die ein Messer 4 aufweist, das auf einer drehbaren Messerwelle 5 gelagert ist, die über eine Riemenscheibe 6 von einem nicht dargestellten Riemen angetrieben wird. Das Messer 4 ist so beschaffen und angeordnet, daß es die gesamte Öffnung der Extrusionsdüse 2 überstreichen kann. Dabei ist das Messer 4 so angeordnet, daß es beim Überstreichen der Öffnung der Extrusionsdüse 2 direkt an dieser anliegt, wodurch ein besonders sauberer Schnitt gewährleistet wird. Über die Extrusionsgeschwindigkeit und die Drehgeschwindigkeit der Messerwelle 5 kann die Länge der abgeschnittenen Teile 3 des Extrudates eingestellt werden.

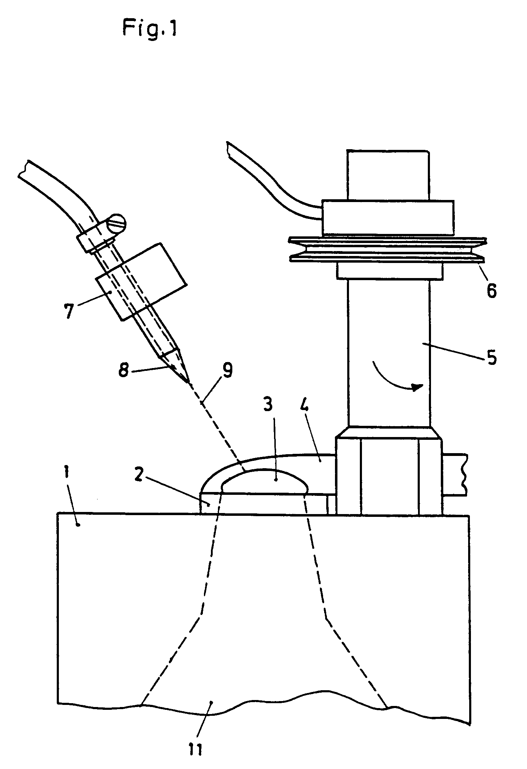

Wie gut aus Figur 1 zu sehen, wird das Teil 3 des Extrudates von einer Spritzeinrichtung 7 mit einem Druckkopf 8 in Spritzrichtung 9 mit einem Farbstrahl bespritzt. in Figur 1 ist nur eine Spritzeinrichtung 7 schematisch dargestellt. Dabei erfolgt das Bespritzen des Teiles 3 vor dem Abschneiden des Teiles 3 vom Extrudat. Da in der in Figur 1 dargestellten Stellung gerade das Teil 3 abgeschnitten wird, ist der Spritzvorgang unterbrochen und das Teil 3 bereits fertig bespritzt.

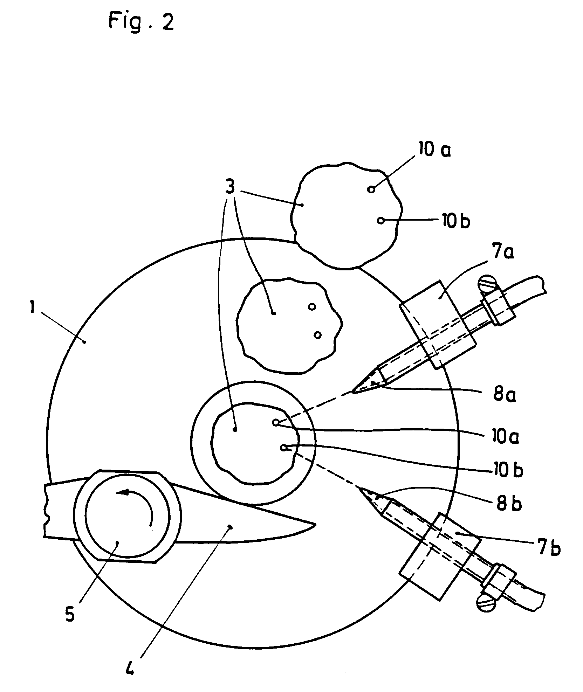

Bei dem dargestellten Ausführungsbeispiel sind wie aus Figur 2 zu sehen, am Umfang des Düsenkopfes 1 zwei Spritzeinrichtungen 7a, 7b vorgesehen, die jeweils einen vor dem Abschneiden einen Punkt 10a, 10b auf das Teil 3 spritzen. In Figur 2 ist auch die Flugbahn der abgeschnittenen Teile 3 gut zu sehen, die eine Funktion der Form des Messers 4, dessen Drehrichtung und Drehgeschwindigekeit sowie der Extrusionsgeschwindigkeit und des Druckes des extrudierten Materiales ist. Die Spritzeinrichtungen 7 sind so ausgerichtet und werden so gesteuert, daß durch diese nur die Teile 3 vor dem Abschneiden bespritzt werden, um eine Verunreinigung des Messers 4 und der wegfliegenden Teile 3 zu vermeiden.

Eine besondere Anwendung finden also Vorrichtung und Verfahren gemäß der Erfindung auf das Farbspritzen wenigstens eines Punktes, insbesondere Auges, beispielsweise von Tieraugen, auf Snacks, die sich im Expansionszustand beim Verlassen der Extruderdüse befinden und bevor diese abgeschnitten werden. Die Frequenz beim Farbspritzen wird an die Frequenz des Schneidmessers angepaßt.

## Patentansprüche

1. Verfahren zum Extrudieren und Beschichten von Nahrungsmitteln, bei dem das Nahrungsmittel mittels einer Extrudiervorrichtung extrudiert und nach dem Extrudieren mittels einer Schneideinrichtung abgeschnitten wird, **dadurch gekennzeichnet, daß** das Material (11) beim Verlassen der Extrusionsdüse (2) vor dem Abschneiden mit zumindest einem Zusatzstoff bespritzt wird.

2. Verfahren nach Anspruch 1, **dadurch gekennzeichnet, daß** der Zusatzstoff intermittierend aufgespritzt wird.

3. Verfahren nach Anspruch 1 oder 2, **dadurch gekennzeichnet, daß** das Bespritzen des extrudierten Materiales (11) während des Abschneidens des Materiales (11) unterbrochen wird.

4. Verfahren nach Anspruch 2 oder 3, **dadurch gekennzeichnet, daß** der Zusatzstoff mit einer Frequenz von 500 bis 20000 Hz aufgespritzt wird.

5. Verfahren nach einem der vorangehenden Ansprüche, **dadurch gekennzeichnet, daß** das Aufspritzen des Zusatzstoffes mit der Extrusionsgeschwindigkeit und/oder der Schneidfrequenz der Schneideinrichtung (4,5) synchronisiert ist.

6. Verfahren nach einem der vorangehenden Ansprüche, **dadurch gekennzeichnet, daß** das Aufspritzen des Zusatzstoffes mit Hilfe einer Fotozelle oder eines Taktgebers gesteuert wird.

7. Verfahren nach einem der vorangehenden Ansprüche, **dadurch gekennzeichnet, daß** als Zusatzstoff Farbe aufgespritzt wird.

8. Verfahren nach einem der vorangehenden Ansprüche, **dadurch gekennzeichnet, daß** mehrere Farben gleichzeitig oder nacheinander aufgespritzt werden.

9. Verfahren nach einem der vorangehenden Ansprüche, **dadurch gekennzeichnet, daß** als Zusatzstoff zumindest ein Aromastoff aufgespritzt wird.

10. Verfahren nach einem der vorangehenden Ansprüche, **dadurch gekennzeichnet, daß** die Spritzrichtung (9) mittels einer Steuereinrichtung steuerbar ist.

11. Vorrichtung zum Extrudieren von Nahrungsmitteln, mit einer Extruderschnecke zur Zuführung des zu extrudierenden Materials, das durch eine Extrusionsdüse extrudiert und nachdem Extrudieren mittels einer Schneideinrichtung abgeschnitten wird, **dadurch gekennzeichnet, daß** mittels zumindest einer Spritzeinrichtung (7) vor dem Abschneiden des extrudierten Materials (11) zumindest ein Zusatzstoff auf dieses aufgespritzt wird.

12. Vorrichtung nach Anspruch 11, **dadurch gekennzeichnet, daß** die Spritzeinrichtung (7) den Zusatzstoff intermittierend auf das extrudierte Material (11) aufspritzt.

13. Vorrichtung nach Anspruch 11 oder 12, **dadurch gekennzeichnet, daß** das Aufspritzen des Zusatzstoffes während des Abschneidens des extrudierten Materiales (11) unterbrochen wird.

14. Vorrichtung nach einem der vorangehenden Vorrichtungsansprüche, **dadurch gekennzeichnet, daß** die Spritzeinrichtung (7) so eingestellt ist, daß der Strahl nur das gerade extrudierte Material (11) erreicht.

15. Vorrichtung nach einem der vorangegangenen Vorrichtungsansprüche, **dadurch gekennzeichnet, daß** die Spritzeinrichtung (7) mit einer Frequenz von 500 bis 20000 Hz arbeitet.

16. Vorrichtung nach einem der vorangegangenen Vorrichtungsansprüche, **dadurch gekennzeichnet, daß** die Spritzeinrichtung (7) mit der Extrusionsgeschwindigkeit und/oder der Schneidfrequenz der Schneideinrichtung (4,5) synchronisiert ist.

17. Vorrichtung nach einem der vorangegangenen Vorrichtungsansprüche, **dadurch gekennzeichnet, daß** die Spritzeinrichtung (7) mit Hilfe einer Fotozelle oder einem Taktgeber gesteuert wird.

18. Vorrichtung nach einem der vorangegangenen Vorrichtungsansprüche, **dadurch gekennzeichnet, daß** sich die Spritzeinrichtung (7) in unmittelbarer Nähe der Extrusionsdüse (2) befindet.

19. Vorrichtung nach Anspruch 18, **dadurch gekennzeichnet, daß** die Spritzeinrichtung (7) von der Extrusionsdüse (2) einen Abstand von etwa 4 mm hat.

20. Vorrichtung nach einem der vorangegangenen Vorrichtungsansprüche, **dadurch gekennzeichnet, daß** die Schneideinrichtung (4,5) zumindest ein am Düsenkopf (1) der Extrusionsdüse (2) gelagertes Messer (4) aufweist und die Spritzeinrichtung (7) von diesem Messer (4) einen möglichst geringen Abstand hat.

21. Vorrichtung nach einem der vorangegangenen Vorrichtungsansprüche, **dadurch gekennzeichnet, daß** die Spritzeinrichtung (7) zumindest einen nach dem Ink-jet-Verfahren, Magnetverfahren oder dem Airlessverfahren arbeitetenden Druckkopf (8) aufweist.

22. Vorrichtung nach Anspruch 21, **dadurch gekennzeichnet, daß** die Spritzeinrichtung (7) einen nach dem Bubble-jet-Verfahren arbeitenden Druckkopf (8) aufweist.

23. Vorrichtung nach Anspruch 21, **dadurch gekennzeichnet, daß** die Spritzeinrichtung (7) einen nach dem Piezo-Verfahren arbeitenden Druckkopf (8) aufweist.

24. Vorrichtung nach einem der Ansprüche 21 bis 23, **dadurch gekennzeichnet, daß** der Druckkopf (8) mehrere Düsen aufweist.

25. Vorrichtung nach Anspruch 24, **dadurch gekennzeichnet, daß** der Druckkopf (8) mehrere Düsen für unterschiedliche Farbstoffe aufweist.

26. Vorrichtung nach einem der Ansprüche 21 bis 25, **dadurch gekennzeichnet, daß** der Druckkopf (8) leicht austauschbar ist.

27. Vorrichtung nach einem der vorangehenden Vorrichtungsansprüche, **dadurch gekennzeichnet, daß** die Spritzrichtung (9) der Spritzeinrichtung (7) verstellbar ist.

28. Vorrichtung nach Anspruch 27, **dadurch gekennzeichnet, daß** die Spritzrichtung (9) mittels einer Steuereinrichtung verstellbar ist.

29. Vorrichtung nach einem der vorangehenden Vorrichtungsansprüche, **dadurch gekennzeichnet, daß** mehrere Spritzeinrichtungen (7) um die Extrusionsdüse (1) herum angeordnet sind.

30. Verwendung der Vorrichtung nach einem der Ansprüche 11 bis 29 zum Farbspritzen wenigstens eines Punktes, insbesondere Auges zum Beispiel Tierauges, auf ein im Expansionszustand an der Extruderdüse befindliches aus der Düse gerade austretendes Snackprodukt, vor dessen Abschneiden vom Strang.

31. Anwendung des Verfahrens nach einem der Ansprüche 1 bis 10 auf das Farbspritzen wenigstens eines Punktes, insbesondere Auges wie Tierauges, auf Snacks mittels eines Sprühstrahls, dessen Frequenz bei 500 bis 20.000 Hz in Anpassung an die Schneidfrequenz liegt, während diese im Expansionszustand befindlichen Snacks die Extruderdüse verlassen und bevor sie vom Extrudatstrang geschnitten werden.

## Claims

1. Process for extruding and coating foodstuffs, in which the foodstuff is extruded by means of an extruder device and, after the extrusion, is cut off by means of a cutting device, characterized in that the material (11), on leaving the extrusion die (2), is sprayed with at least one additive before it is cut off.

2. Process according to Claim 1, characterized in that the additive is sprayed on intermittently.

3. Process according to Claim 1 or 2, characterized in that the spraying of the extruded material (11) is interrupted during the cutting-off of the material (11).

4. Process according to Claim 2 or 3, characterized in that the additive is sprayed on with a frequency of 500 to 20000 Hz.

5. Process according to one of the preceding claims, characterized in that the spraying-on of the additive is synchronized with the extrusion rate and/or with the cutting frequency of the cutting device (4, 5).

6. Process according to one of the preceding claims, characterized in that the spraying-on of the additive is controlled with the aid of a photoelectric cell or a timing generator.

7. Process according to one of the preceding claims, characterized in that ink is sprayed on as additive.

8. Process according to one of the preceding claims, characterized in that a plurality of inks are sprayed on simultaneously or sequentially.

9. Process according to one of the preceding claims, characterized in that at least one aromatic substance is sprayed on as additive.

10. Process according to one of the preceding claims, characterized in that the spray direction (9) is controllable by means of a control device.

11. Device for extruding foodstuffs, with an extruder screw for feeding the material to be extruded, which is extruded through an extrusion die and after the extrusion is cut off by means of a cutting device, characterized in that at least one additive is sprayed onto the extruded material (11) by means of at least one spray device (7) before the said extruded material (11) is cut off.

12. Device according to Claim 11, characterized in that the spray device (7) sprays the additive intermittently onto the extruded material (11).

13. Device according to Claim 11 or 12, characterized in that the spraying-on of the additive is interrupted during the cutting-off of the extruded material (11).

14. Device according to one of the preceding device claims, characterized in that the spray device (7) is adjusted such that the jet only reaches the material (11) having just been extruded.

15. Device according to one of the preceding device claims, characterized in that the spray device (7) operates with a frequency of 500 to 20000 Hz.

16. Device according to one of the preceding device claims, characterized in that the spray device (7) is synchronized with the extrusion rate and/or the cutting frequency of the cutting device (4, 5).

17. Device according to one of the preceding device claims, characterized in that the spray device (7) is controlled with the aid of a photoelectric cell or a timing generator.

18. Device according to one of the preceding device claims, characterized in that the spray device (7) is disposed in the immediate vicinity of the extrusion die (2).

19. Device according to Claim 18, characterized in that the spray device (7) has a clearance of approximately 4 mm from the extrusion die (2).

20. Device according to one of the preceding device claims, characterized in that the cutting device (4, 5) has at least one knife (4) mounted on the die head (1) of the extrusion die (2) and the spray device (7) has as small a clearance as possible from said knife (4).

21. Device according to one of the preceding device claims, characterized in that the spray device (7) has at least one print head (8) operating by the ink-jet process, magnetic process or the airless process.

22. Device according to Claim 21, characterized in that the spray device (7) has a print head (8) operating by the bubble-jet process.

23. Device according to Claim 21, characterized in that the spray device (7) has a print head (8) operating by the piezoelectric process.

24. Device according to one of Claims 21 to 23, characterized in that the print head (8) has a plurality of nozzles.

25. Device according to Claim 24, characterized in that the print head (8) has a plurality of nozzles for different colorants.

26. Device according to one of Claims 21 to 25, characterized in that the print head (8) can be easily exchanged.

27. Device according to one of the preceding device claims, characterized in that the spray direction (9) of the spray device (7) is adjustable.

28. Device according to Claim 27, characterized in that the spray direction (9) is adjustable by means of a control device.

29. Device according to one of the preceding device claims, characterized in that a plurality of spray devices (7) are arranged around the extrusion die (1).

30. Use of the device according to one of Claims 11 to 29 for ink-spraying of at least one spot, in particular an eye, for example an animal eye, onto a snack product which is in the state of expansion at the extruder die and is just emerging from the die, before it is cut off from the strand.

31. Application of the process according to one of Claims 1 to 10, to the ink-spraying of at least one spot, in particular an eye such as an animal eye, onto snacks by means of a spray jet whose frequency is 500 to 20000 Hz, adapted to the cutting frequency, while said snacks, which are in the state of expansion, leave the extruder die before they are cut off from the extrudate strand.

## Revendications

1. Procédé d'extrusion et d'enrobage d'aliments, dans lequel l'aliment est extrudé au moyen d'un dispositif d'extrusion et, à l'issue de l'extrusion, est découpé à l'aide d'un dispositif de coupe, caractérisé en ce que, en quittant la filière d'extrusion (2) et avant d'être découpé, le matériau (11) est pulvérisé avec au moins un additif.

2. Procédé selon la revendication 1, caractérisé en ce que l'additif est pulvérisé par intermittence.

3. Procédé selon la revendication 1 ou 2, caractérisé en ce que la pulvérisation du matériau extrudé (11) est interrompue lors de la découpe du matériau (11).

4. Procédé selon la revendication 2 ou 3, caractérisé en ce que l'additif est pulvérisé à une fréquence de 500 à 20 000 Hz.

5. Procédé selon l'une des revendications précédentes, caractérisé en ce que la pulvérisation de l'additif est synchronisée avec la vitesse d'extrusion et/ou avec la fréquence de coupe du dispositif de coupe (4, 5).

6. Procédé selon l'une des revendications précédentes, caractérisé en ce que la pulvérisation de l'additif est commandée à l'aide d'une cellule photo-électrique ou d'un générateur de rythme.

7. Procédé selon l'une des revendications précédentes, caractérisé en ce que l'additif pulvérisé est un colorant.

8. Procédé selon l'une des revendications précédentes, caractérisé en ce que plusieurs colorants sont pulvérisés simultanément ou consécutivement.

9. Procédé selon l'une des revendications précédentes, caractérisé en ce que l'additif pulvérisé est au moins un arôme.

10. Procédé selon l'une des revendications précédentes, caractérisé en ce que la direction de pulvérisation (9) peut être commandée au moyen d'un dispositif de commande.

11. Dispositif d'extrusion d'aliments, comprenant une vis d'extrusion pour fournir le matériau à extruder qui est extrudé à travers une filière d'extrusion et, à l'issue de l'extrusion, est découpé au moyen d'un dispositif de coupe, caractérisé en ce que, au moyen d'au moins un dispositif de pulvérisation (7), au moins un additif est pulvérisé sur le matériau extrudé (11) avant que celui-ci ne soit découpé.

12. Dispositif selon la revendication 11, caractérisé en ce que le dispositif de pulvérisation (7) pulvérise l'additif par intermittence sur le matériau extrudé (11).

13. Dispositif selon la revendication 11 ou 12, caractérisé en ce que la pulvérisation de l'additif est interrompue lors de la découpe du matériau extrudé (11).

14. Dispositif selon l'une des revendications de dispositif précédentes, caractérisé en ce que le dispositif de pulvérisation (7) est réglé pour que le jet n'atteigne que le matériau (11) qui vient d'être extrudé.

15. Dispositif selon l'une des revendications de dispositif précédentes, caractérisé en ce que le dispositif de pulvérisation (7) fonctionne à une fréquence de 500 à 20 000 HZ.

16. Dispositif selon l'une des revendications de dispositif précédentes, caractérisé en ce que le dispositif de pulvérisation (7) est synchronisé avec la vitesse d'extrusion et/ou avec la fréquence de coupe du dispositif de coupe (4, 5).

17. Dispositif selon l'une des revendications de dispositif précédentes, caractérisé en ce que le dispositif de pulvérisation (7) est commandé à l'aide d'une cellule photo-électrique ou d'un générateur de rythme.

18. Dispositif selon l'une des revendications de dispositif précédentes, caractérisé en ce que le dispositif de pulvérisation (7) se trouve à proximité immédiate de la filière d'extrusion (2).

19. Dispositif selon la revendication 18, caractérisé en ce que le dispositif de pulvérisation (7) présente un écartement d'environ 4 mm par rapport à la filière d'extrusion (2).

20. Dispositif selon l'une des revendications de dispositif précédentes, caractérisé en ce que le dispositif de coupe (4, 5) comporte un couteau (4) monté au moins sur la tête (1) de la filière d'extrusion (2), et le dispositif de pulvérisation (7) présente un écartement aussi faible que possible par rapport audit couteau (4).

21. Dispositif selon l'une des revendications de dispositif précédentes, caractérisé en ce que le dispositif de pulvérisation (7) comporte au moins une tête d'impression (8) fonctionnant selon le procédé à jet d'encre, le procédé magnétique ou le procédé sans air.

22. Dispositif selon la revendication 21, caractérisé en ce que le dispositif de pulvérisation (7) comporte une tête d'impression (8) fonctionnant selon le procédé à bulles d'encre.

23. Dispositif selon la revendication 21, caractérisé en ce que le dispositif de pulvérisation (7) comporte une tête d'impression (8) fonctionnant selon le procédé piézoélectrique.

24. Dispositif selon l'une des revendications 21 à 23, caractérisé en ce que la tête d'impression (8) comporte plusieurs filières.

25. Dispositif selon la revendication 24, caractérisé en ce que la tête d'impression (8) comporte plusieurs filières pour différents colorants.

26. Dispositif selon l'une des revendications 21 à 25, caractérisé en ce que la tête d'impression (8) est facile à remplacer.

27. Dispositif selon l'une des revendications de dispositif précédentes, caractérisé en ce que la direction de pulvérisation (9) du dispositif de pulvérisation (7) est réglable.

28. Dispositif selon la revendication 27, caractérisé en ce que la direction de pulvérisation (9) est réglable au moyen d'un dispositif de commande.

29. Dispositif selon l'une des revendications de dispositif précédentes, caractérisé en ce que plusieurs dispositifs de pulvérisation (7) sont disposés autour de la filière d'extrusion (1).

30. Utilisation du dispositif selon l'une des revendications 11 à 29 pour réaliser par pulvérisation au moins un point, en particulier un oeil tel qu'un oeil d'animal, sur une friandise se trouvant en état d'expansion au niveau de la filière d'extrusion juste à la sortie de ladite filière, avant que ladite friandise ne soit séparée du boudin extrudé.

31. Application du procédé selon l'une des revendications 1 à 10 à la réalisation par pulvérisation d'au moins un point, en particulier d'un oeil tel qu'un oeil d'animal, sur des friandises au moyen d'un jet pulvérisé dont la fréquence est comprise entre 500 et 20 000 Hz en fonction de la fréquence de coupe, pendant que lesdites friandises quittent la filière d'extrusion en état d'expansion et avant qu'elles ne soient séparées du boudin d'extrudat.
